# EUROPÄISCHE PATENTSCHRIFT

(11) **EP 2 738 031 B1**
(45) Veröffentlichungstag und Bekanntmachung des Hinweises auf die Patenterteilung: **03.02.2016**
(21) Anmeldenummer: 13179536.1
(22) Anmeldetag: 07.08.2013
(51) Int. Cl.: B60K 15/03, B60K 15/077, F02M 37/00, F02M 37/10, B60K 15/06

(54) **Tanksystem für ein Kraftfahrzeug**
Tank system for a motor vehicle
Système de réservoir pour un véhicule automobile

(30) Priorität: 30.11.2012 EP 12195065
(43) Veröffentlichungstag der Anmeldung: 04.06.2014
(73) Patentinhaber: Magna Steyr Fuel Systems GesmbH, 8261 Sinabelkirchen (AT)
(72) Erfinder: Kahler, Bernd, 8020 Graz (AT); Voglmeier, Wolfgang, 9334 Guttaring (AT)
(74) Vertreter: Zangger, Bernd

(56) Entgegenhaltungen:
- EP-A1- 2 453 115
- DE-A1- 19 900 378
- DE-U1- 29 824 208
- US-A- 5 363 827

## Beschreibung

### Gebiet der Erfindung

Die vorliegende Erfindung betrifft ein Tanksystem für ein Kraftfahrzeug. Das Tanksystem umfasst einen Tank, ein im Tank angeordnetes Reservoir, eine Entnahmeeinheit die dazu eingerichtet ist, über eine Motorvorlaufleitung Kraftstoff aus dem Reservoir zu entnehmen und einer Antriebseinheit des Kraftfahrzeugs zuzuführen. Weiters umfasst das Tanksystem zumindest eine Zuführleitung, die das Reservoir mit dem Tank verbindet.

### Stand der Technik

Derartige Tanksysteme sind bekannt, wobei als Reservoir üblicherweise ein oben offener Topf verwendet wird. Der Topf wird so eingerichtet, dass sich, vor allem bei geringen Füllständen, der Kraftstoff im Topf sammelt. Hierzu wird beispielsweise ein Pilzventil am Boden des Topfs angeordnet.

Ein derartiger Speichertopf ist beispielsweise aus der DE 10 2007 039 861 A1 bekannt, die einen Kraftstofftank mit mindestens einem Sattel angibt, und mit einem im Bereich des Sattels vorgesehenen Schwappschutzmittel. In dem Speichertopf ist ein Förderaggregat angeordnet, welches Kraftstoff aus dem Speichertopf saugt und hierdurch Saugstrahlpumpen antreibt. Die Befüllung des Speichertopfs erfolgt beispielsweise mittels einer Topf-Saugstrahlpumpe.

Die EP 0 976 602 A2 offenbart einen Kraftstofftank mit einem innerhalb des Kraftstofftanks angeordneten Reservoir, dem eine motorisch angetriebene Pumpe zugeordnet ist, und mit einem Füllrohr, durch welches der Kraftstoff in den Kraftstofftank einströmt, wobei zumindest ein Teil des Kraftstoffs direkt in das Reservoir geführt wird. Eine Rückführleitung führt abgepumpten, überschüssigen Kraftstoff in einen das Reservoir umgebenden Raum zurück und ist an ihrem ausströmseitigen Ende mit einer Treibdüse einer Saugstrahlpumpe versehen, deren Fangdüse das einströmseitige Ende eines Überlaufrohres bildet, welches in das Reservoir mündet.

Aus der DE 199 00 378 A1 ist ein Tanksystem mit den Merkmalen des Oberbegriffs des Anspruchs 1 bekannt bestehend aus einem Tankbehälter, der durch mindestens einen in dem Tankbehälter ausgebildeten Vorsprung in einen ersten Behälterabschnitt und mindestens einen weiteren Behälterabschnitt aufgeteilt ist, wobei in dem Tankbehälter über eine Öffnung eine Pumpenvorrichtung angeordnet ist, die Mittel aufweist, um den in dem Tankbehälter enthaltenen Kraftstoff zu entnehmen, dadurch gekennzeichnet, dass die Mittel ein an der Pumpenvorrichtung angeordnetes Winkelstück mit mindestens zwei Ansaugstutzen aufweist, dass an jedem Ansaugstutzen ein erstes Ende eines Schlauchs angeordnet ist, der mit einem zweiten Ende in einen bestimmten Behälterabschnitt mündet, und dass an dem zweiten Ende ein Ventil vorgesehen ist, welches verhindert, dass Luft in den Schlauch eintritt. Die US 5 363 827 A offenbart ein Kraftstoffsystem umfassend eine Kraftstoffpumpe innerhalb eines aufrechten Reservekraftstoffbehälters in einem Kraftstofftank. Der Reservekraftstoffbehälter ist eine abgedichtete Konstruktion, die den Kraftstoff im Reservekraftstoffbehälter vom Kraftstoff in dem Tank trennt. Kraftstoff kann in eine Einlasskammer der Pumpe durch separate, dem Kraftstofftank und dem Kraftstoffvorratsbehälter zugeordnete Tellerventile gelangen.

### Zusammenfassung der Erfindung

Es ist eine Aufgabe der Erfindung, ein kostengünstiges Tanksystem für ein Kraftfahrzeug anzugeben, dass einen zuverlässigen Betrieb auch bei geringer Kraftstoffmenge im Tanksystem ermöglicht. Insbesondere sollen die erforderliche Erstbetankungsmenge und die nicht absaugbare Restmenge des Kraftstoffs im Tanksystem reduziert werden.

Die Lösung der Aufgabe erfolgt durch ein Tanksystem für ein Kraftfahrzeug, umfassend einen Tank, ein im Tank angeordnetes Reservoir, eine Entnahmeeinheit die dazu eingerichtet ist, über eine Motorvorlaufleitung Kraftstoff aus dem Reservoir zu entnehmen und einer Antriebseinheit des Kraftfahrzeugs zuzuführen, und zumindest eine Zuführleitung, die das Reservoir mit dem Tank verbindet, wobei das Reservoir ein Reservoir-Ventil aufweist und über das Reservoir-Ventil mit dem Tank verbindbar ist, wobei das Reservoir-Ventil in einem Normalbetriebsmodus, in welchem das Reservoir-Ventil von Kraftstoff im Tank umgeben ist, geöffnet ist und in einem Restmengenmodus, in welchem das Reservoir-Ventil nicht von Kraftstoff im Tank umgeben ist, geschlossen ist, wobei das Reservoir ein Behälter ist, der im Restmengenmodus ausschließlich an der Motorvorlaufleitung und an der zumindest einen Zuführleitung offen ist, wobei das Reservoir-Ventil in einem Schwalltopf des Tanks angeordnet ist, so dass der Schwalltopf über das Reservoir-Ventil mit dem Reservoir verbindbar ist.

Das Reservoir eines erfindungsgemäßen Tanksystems ist daher im Normalbetriebsmodus, in welchem noch ausreichend Kraftstoff im Tank zur Verfügung steht, zum Tank hin über das Reservoir-Ventil geöffnet, so dass Kraftstoff durch die Entnahmeeinheit aus dem Tank in der Nähe des Reservoirs abgesaugt wird und im Reservoir kein Unterdruck entsteht. Hingegen entsteht im Restmengenmodus, in welchem im Tank am Schwimmerventil nicht ausreichend Kraftstoff zur Verfügung steht, so dass das Reservoir-Ventil geschlossen ist, durch eine Entnahme von Kraftstoff aus dem Reservoir mittels der Entnahmeeinheit ein Unterdruck im Reservoir, wodurch über die zumindest eine Zuführleitung Kraftstoff aus dem Tank in das Reservoir gesaugt wird.

Durch eine geeignete Anordnung des strömungsseitigen Endes oder mehrerer Enden von mehreren Zuführleitungen im Tank kann hierdurch die Kraftstoffzufuhr zur Entnahmeeinheit und hierdurch zur Antriebseinheit des Kraftfahrzeuges auch bei geringen Kraftstoffmengen sicher gestellt werden, ohne zusätzliche Hilfsmittel wie etwa Saugstrahlpumpen verwenden zu müssen.

Weiterbildungen der Erfindung sind in den abhängigen Ansprüchen, der Beschreibung sowie den beigefügten Zeichnungen angegeben.

Bevorzugt ist das Reservoir im Normalbetriebsmodus an der Motorvorlaufleitung und an dem Reservoir-Ventil offen, besonders bevorzugt ist es auch an der zumindest einen Zuführleitung offen, insbesondere ist das Reservoir auch im Normalbetriebsmodus ausschließlich an den genannten Stellen offen.

Besonders bevorzugt ist das Reservoir-Ventil ein Schwimmerventil.

Bevorzugt ist das Reservoir ein flacher Behälter in Bodennähe des Tanks.

Bevorzugt ist das Tanksystem über ein Einfüllrohr befüllbar, wobei das Einfüllrohr in den Schwalltopf mündet. Hierdurch ist der Schwalltopf, der sich bevorzugt über dem Reservoir befindet, schon nach der Betankung mit Kraftstoff gefüllt, so dass über der Kraftstoff über das Reservoir-Ventil abgesaugt werden kann.

Bevorzugt ist am in den Tank mündenden Ende der Zuführleitung ein Zuführleitungs-Schwimmerventil angeordnet.

Ein erfindungsgemäßes Tanksystem kann besonders bevorzugt zumindest zwei Zuführleitungen umfassen, um Kraftstoff aus verschiedenen Positionen im Tank abzusaugen. Die Enden der Zuführleitungen sind dann vorteilhaft räumlich im Tank verteilt, sodass auch bei Schräglage des Fahrzeuges oder abgetrennten Tankbereichen und geringem Kraftstoffniveau im Tank möglichst zumindest ein Ende einer Zuführleitung noch von Kraftstoff umgeben ist. Bevorzugt ist an allen Enden der Zuführleitungen jeweils ein Schwimmerventil angeordnet.

Bevorzugt umfasst die Entnahmeeinheit eine Rücklaufleitung und die Rücklaufleitung mündet in einen Rücklauf-Speicherbereich, der bevorzugt ein gesonderter Bereich im Tank ist.

Bevorzugt weist das Reservoir ein Mittel auf, dass die Entstehung eines Unterdrucks im Reservoir über einem vorgegeben maximalen Unterdruck verhindert, insbesondere ein Sicherheitsventil.

Das Sicherheitsventil kann dann besonders vorteilhaft mit dem Rücklauf-Speicherbereich verbunden sein. Dadurch wird sichergestellt, dass, wenn das Sicherheitsventil gegen Unterdruck im Reservoir anspricht, Kraftstoff und nicht Luft in den Unterdruckbereich gesaugt wird um die Leitungen weiterhin gefüllt zu halten.

Der Rücklauf-Speicherbereich ist bevorzugt ein getrennter Abschnitt des Schwalltopfes, insbesondere ein seitlich getrennter Abschnitt des Schwalltopfes.

Gemäß einer Ausführungsform umfasst ein erfindungsgemäßes Tanksystem zumindest einen Zusatztank, wobei der Zusatztank mit dem Tank oder mit dem Reservoir über eine Verbindungsleitung verbunden ist. Hierdurch kann das zur Verfügung stehende Tankvolumen vergrößert werden. Wenn der Zusatztank direkt mit dem Reservoir verbunden ist, kann durch den Unterdruck im Reservoir über die Verbindungsleitung Kraftstoff direkt aus dem Zusatztank angesaugt werden. Ein Abreißen der Flüssigkeitssäule in der Verbindungsleitung wird dann besonders effizient vermieden, sodass das Prinzip der kommunizierenden Gefäße und eines Saughebers genutzt werden können.

Bevorzugt ist am in den Tank mündenden Ende der Verbindungsleitung ein Verbindungsleitungs-Schwimmerventil angeordnet ist. Die Verbindungsleitung kann auch, beispielsweise über ein T-Stück im Zusatztank, an mehreren Enden in den Zusatztank münden, die bevorzugt jeweils mit einem Schwimmerventil ausgestattet sind, so dass auch der Zusatztank mehrere Zuführleitungen zum Reservoir des Tanks aufweisen kann. Hierdurch kann auch aus dem Zusatztank an verschiedenen Positionen Kraftstoff abgesaugt werden.

Bevorzugt weist der Tank und/oder der Zusatztank ein Mittel auf, das die Entstehung eines zu hohen Unterdrucks im Tank und/oder im Zusatztank verhindert, insbesondere ein Belüftungsventil, bevorzugt ein Roll-Over-Ventil. Die Belüftung des Tanksystems erfolgt beispielsweise ausschließlich über das Belüftungsventil des Zusatztanks, so dass ein zu starker Unterdruck im Tank nötigenfalls über den Zusatztank abgebaut wird. Insbesondere wenn der Zusatztank über die Verbindungsleitung mit dem Reservoir verbunden ist, weisen bevorzugt der Tank und der Zusatztank Belüftungsventile auf.

### Kurzbeschreibung der Zeichnungen

Die Erfindung wird im Folgenden beispielhaft unter Bezugnahme auf die Zeichnungen beschrieben.
- Fig. 1: ist ein Hydraulikschema eines erfindungsgemäßen Tanksystems mit einem Tank.
- Fig. 2: ist ein Hydraulikschema eines erfindungsgemäßen Tanksystems mit einem Tank und einem Zusatztank.

### Detaillierte Beschreibung der Erfindung

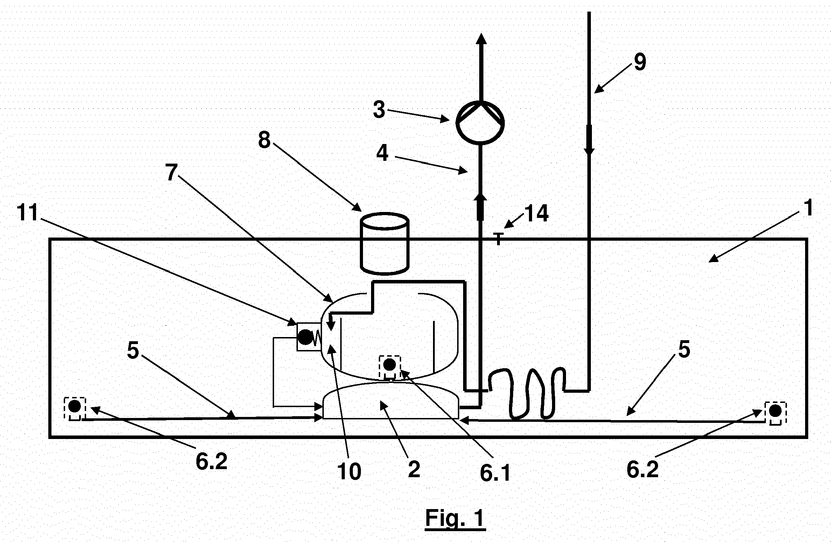

In Fig. 1 ist ein Tanksystem für ein Kraftfahrzeug dargestellt, mit einem Tank 1, einem im Tank 1 in Bodennähe angeordneten flachen Reservoir 2, einer Entnahmeeinheit 3, die über eine Motorvorlaufleitung 4 Kraftstoff aus dem Reservoir 2 entnehmen kann und einer nicht dargestellten Antriebseinheit des Kraftfahrzeugs zuführen. Zwei Zuführleitungen 5 verbinden das Reservoir 2 mit dem Tank 1, wobei die Enden der Zuführleitungen 5 an weit voneinander beabstandeten Positionen in Bodennähe des Tanks 1 liegen und jeweils mit einem Zuführleitungs-Schwimmerventil 6.2 ausgestattet sind. Das Reservoir 2 weist ein Schwimmerventil als Reservoir-Ventil 6.1 auf, über welches das Reservoir 2 mit dem Tank 1 verbindbar ist. Das Reservoir-Ventil 6.1 ist in einem Normalbetriebsmodus, in welchem das Reservoir-Ventil 6.1 von Kraftstoff im Tank 1 umgeben ist, geöffnet und in einem Restmengenmodus, in welchem das Reservoir-Ventil 6.1 nicht von Kraftstoff im Tank 1 umgeben ist, geschlossen. Das Reservoir 2 ist im Restmengenmodus, also bei geschlossenem Reservoir-Ventil 6.1, ausschließlich an der Motorvorlaufleitung 4 und an den beiden Zuführleitungen 5 offen. Im Normalbetriebsmodus ist zusätzlich das Reservoir-Ventil 6.1 geöffnet. Hierdurch wird im Normalbetriebsmodus Kraftstoff von der Entnahmeeinheit 3 über das Reservoir 2 und das geöffnete Reservoir-Ventil 6.1 aus dem Tank 1 abgesaugt, wenn das Reservoir-Ventil 6.1 hingegen geschlossen ist, über die Zuführleitungen 5.

Das Reservoir-Ventil 6.1 ist am Boden eines Schwalltopfes 7 angeordnet, der sich über dem Reservoir 2 befindet. Oberhalb des Schwalltopfes 7, oder in den Schwalltopf 7, mündet wiederum ein Einfüllrohr 8, sodass bei einer Betankung des Tanksystems zunächst der Schwalltopf 7 gefüllt wird.

Die Entnahmeeinheit 3 umfasst eine Rücklaufleitung 9, die in einen seitlich getrennten Abschnitt des Schwalltopfes 7 mündet, der als Rücklauf-Speicherbereich 10 ausgebildet ist.

Das Tanksystem verfügt weiters über ein Sicherheitsventil 11, dass die Entstehung eines zu hohen Unterdrucks im Reservoir 2, über einem vorgegeben maximalen Unterdruck, verhindert, indem es bei zu hohem Unterdruck öffnet. Das Sicherheitsventil 11 ist mit dem Rücklauf-Speicherbereich 10 verbunden, so dass bei geöffnetem Sicherheitsventil 11 durch die Entnahmeeinheit 3 Kraftstoff aus dem Rücklauf-Speicherbereich 10 abgesaugt wird.

Der Tank 1 weist zudem an dessen Oberseite ein Roll-Over-Ventil 14 auf.

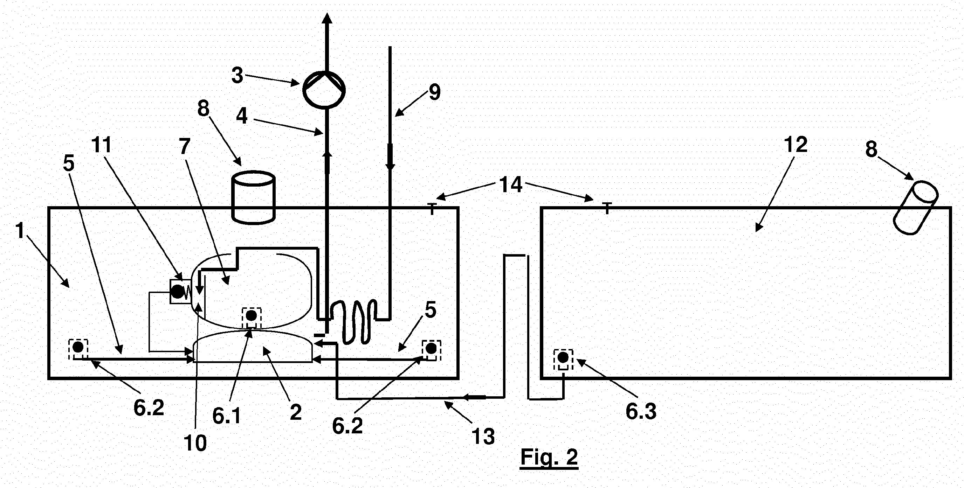

In der Ausführungsform eines Tanksystems gemäß Fig. 2 ist zusätzlich zum primären Tank 1 ein Zusatztank 12 zur Erhöhung des Tankvolumens vorgesehen. Der Zusatztank 12 ist über eine Verbindungsleitung 13 mit dem Tank 1 verbunden, so dass bei Entnahme von Kraftstoff durch die Entnahmeeinheit 3 des Tanks 1 auch Kraftstoff über die Verbindungsleitung 13 aus dem Zusatztank 12 in das Reservoir 2 gelangen kann. Die Verbindungsleitung 13 verfügt über zwei Enden auf Seiten des Zusatztanks 12, die wie die Enden der Zuführleitungen 5 in Bodennähe an verschiedenen Bereichen des Zusatztanks 12 angeordnet sind. Das Ende der Verbindungsleitung 13 weist ein weiteres Schwimmerventil, nämlich das Verbindungsleitungs-Schwimmerventil 6.3 auf. Der Zusatztank 12 verfügt ebenfalls über ein Einfüllrohr 8 und ein Roll-Over-Ventil 14.

Die Erfindung ermöglicht somit in allen Ausführungsformen einen zuverlässigen Betrieb eines Tanksystems für ein Kraftfahrzeug auch bei geringer Kraftstoffmenge im Tanksystem.

### Bezugszeichenliste

- 1: Tank
- 2: Reservoir
- 3: Entnahmeeinheit
- 4: Motorvorlaufleitung
- 5: Zuführleitung
- 6.1: Reservoir-Ventil
- 6.2: Zuführleitungs-Schwimmerventil
- 6.3: Verbindungsleitungs-Schwimmerventil
- 7: Schwalltopf
- 8: Einfüllrohr
- 9: Rücklaufleitung
- 10: Rücklauf-Speicherbereich
- 11: Sicherheitsventil
- 12: Zusatztank
- 13: Verbindungsleitung
- 14: Roll-Over-Ventil

## Patentansprüche

1. Tanksystem für ein Kraftfahrzeug, umfassend einen Tank (1), ein im Tank angeordnetes Reservoir (2), eine Entnahmeeinheit (3) die dazu eingerichtet ist, über eine Motorvorlaufleitung (4) Kraftstoff aus dem Reservoir (2) zu entnehmen und einer Antriebseinheit des Kraftfahrzeugs zuzuführen, und zumindest eine Zuführleitung (5), die das Reservoir (2) mit dem Tank (1) verbindet,
wobei das Reservoir (2) ein Reservoir-Ventil (6.1) aufweist und über das Reservoir-Ventil (6.1) mit dem Tank (1) verbindbar ist, wobei das Reservoir-Ventil (6.1) in einem Normalbetriebsmodus, in welchem das Reservoir-Ventil (6.1) von Kraftstoff im Tank (1) umgeben ist, geöffnet ist und in einem Restmengenmodus, in welchem das Reservoir-Ventil (6.1) nicht von Kraftstoff im Tank (1) umgeben ist, geschlossen ist, wobei das Reservoir (2) ein Behälter ist, der im Restmengenmodus ausschließlich an der Motorvorlaufleitung (4) und an der zumindest einen Zuführleitung (5) offen ist,
**dadurch gekennzeichnet, dass** das Reservoir-Ventil (6.1) in einem Schwalltopf (7) des Tanks (1) angeordnet ist, so dass der Schwalltopf (7) über das Reservoir-Ventil (6.1) mit dem Reservoir (2) verbindbar ist.

2. Tanksystem nach Anspruch 1,
**dadurch gekennzeichnet, dass** das Reservoir (2) im Normalbetriebsmodus an der Motorvorlaufleitung (4) und an dem Reservoir-Ventil (6.1) offen ist, bevorzugt auch an der zumindest einen Zuführleitung (5) offen ist.

3. Tanksystem nach Anspruch 1 oder 2,
**dadurch gekennzeichnet, dass** das Reservoir-Ventil (6.1) ein Schwimmerventil ist.

4. Tanksystem nach zumindest einem der vorhergehenden Ansprüche,
**dadurch gekennzeichnet, dass** das Reservoir (2) ein flacher Behälter in Bodennähe des Tanks (1) ist.

5. Tanksystem nach Anspruch 1,
**dadurch gekennzeichnet, dass** das Tanksystem über ein Einfüllrohr (8) befüllbar ist, wobei das Einfüllrohr (8) in den Schwalltopf (7) mündet.

6. Tanksystem nach zumindest einem der vorhergehenden Ansprüche,
**dadurch gekennzeichnet, dass** am in den Tank (1) mündenden Ende der Zuführleitung (5) ein Zuführleitungs-Schwimmerventil (6.2) angeordnet ist.

7. Tanksystem nach zumindest einem der vorhergehenden Ansprüche,
**dadurch gekennzeichnet, dass** es zumindest zwei Zuführleitungen (5) umfasst.

8. Tanksystem nach zumindest einem der vorhergehenden Ansprüche,
**dadurch gekennzeichnet, dass** die Entnahmeeinheit (3) eine Rücklaufleitung (9) umfasst und die Rücklaufleitung (9) in einen Rücklauf-Speicherbereich (10) mündet.

9. Tanksystem nach zumindest einem der vorhergehenden Ansprüche,
**dadurch gekennzeichnet, dass** das Reservoir (2) ein Mittel aufweist, dass die Entstehung eines Unterdrucks im Reservoir (2) über einem vorgegeben maximalen Unterdruck verhindert, insbesondere ein Sicherheitsventil (11).

10. Tanksystem nach Anspruch 8 und 9,
**dadurch gekennzeichnet, dass** das Sicherheitsventil (11) mit dem Rücklauf-Speicherbereich (10) verbunden ist.

11. Tanksystem nach Anspruch 8,
**dadurch gekennzeichnet, dass** der Rücklauf-Speicherbereich (10) ein getrennter Abschnitt des Schwalltopfes (7) ist, insbesondere ein seitlich getrennter Abschnitt.

12. Tanksystem nach zumindest einem der vorhergehenden Ansprüche,
**dadurch gekennzeichnet, dass** es zumindest einen Zusatztank (12) umfasst, wobei der Zusatztank (12) mit dem Tank (1) oder mit dem Reservoir (2) über eine Verbindungsleitung (13) verbunden ist.

13. Tanksystem nach Anspruch 12,
**dadurch gekennzeichnet, dass** am in den Zusatztank (12) mündenden Ende der Verbindungsleitung (13) ein Verbindungsleitungs-Schwimmerventil (6.3) angeordnet ist oder die Verbindungsleitung (13) in mehreren Enden in den Zusatztank (12) mündet und insbesondere an den mehreren in den Zusatztank (12) mündenden Enden der Verbindungsleitung (13) jeweils ein Verbindungsleitungs-Schwimmerventil (6.3) angeordnet ist.

14. Tanksystem nach zumindest einem der vorhergehenden Ansprüche,
**dadurch gekennzeichnet, dass** der Tank (1) und/oder der Zusatztank (12) ein Mittel aufweist, das die Entstehung eines zu hohen Unterdrucks im Tank (1) und/oder im Zusatztank (12) verhindert, insbesondere ein Belüftungsventil, bevorzugt ein Roll-Over-Ventil (14).

## Claims

1. Tank system for a motor vehicle, comprising a tank (1), a reservoir (2) arranged in the tank, an extraction unit (3) which is adapted to extract fuel from the reservoir (2) via an engine feed line (4) and supply it to a drive unit of the motor vehicle, and at least one supply line (5) which connects the reservoir (2) to the tank (1), wherein the reservoir (2) has a reservoir valve (6.1) and can be connected to the tank (1) via the reservoir valve (6.1), wherein the reservoir valve (6.1) is open in normal operating mode in which the reservoir valve (6.1) is surrounded by fuel in the tank (1), and closed in a residual quantity mode in which the reservoir valve (6.1) is not surrounded by fuel in the tank (1), wherein the reservoir (2) is a container which in residual quantity mode is open exclusively at the engine feed line (4) and at the least one supply line (5), **characterized in that** the reservoir valve (6.1) is arranged in a surge pot (7) of the tank (1) so that the surge pot (7) can be connected to the reservoir (2) via the reservoir valve (6.1).

2. Tank system according to Claim 1, **characterized in that** in normal operating mode the reservoir (2) is open at the engine feed line (4) and at the reservoir valve (6.1), preferably also open at the at least one supply line (5).

3. Tank system according to Claim 1 or 2, **characterized in that** the reservoir valve (6.1) is a float valve.

4. Tank system according to at least one of the preceding claims, **characterized in that** the reservoir (2) is a flat container close to the floor of the tank (1).

5. Tank system according to Claim 1, **characterized in that** the tank system can be filled via a filler pipe (8), wherein the filler pipe (8) opens into the surge pot (7).

6. Tank system according to at least one of the preceding claims, **characterized in that** a supply line float valve (6.2) is arranged at the end of the supply line (5) opening into the tank (1).

7. Tank system according to at least one of the preceding claims, **characterized in that** it comprises at least two supply lines (5).

8. Tank system according to at least one of the preceding claims, **characterized in that** the extraction unit (3) comprises a return line (9), and the return line (9) opens into a return storage region (10).

9. Tank system according to at least one of the preceding claims, **characterized in that** the reservoir (2) has means, in particular a safety valve (11), which prevent the occurrence of a vacuum in the reservoir (2) beyond a predefined maximum vacuum.

10. Tank system according to Claims 8 and 9, **characterized in that** the safety valve (11) is connected to the return storage region (10).

11. Tank system according to Claim 8, **characterized in that** the return storage region (10) is a separate portion of the surge pot (7), in particular a laterally separate portion.

12. Tank system according to at least one of the preceding claims, **characterized in that** it comprises at least one additional tank (12), wherein the additional tank (12) is connected to the tank (1) or the reservoir (2) via a connecting line (13).

13. Tank system according to Claim 12, **characterized in that** a connecting line float valve (6.3) is arranged at the end of the connecting line (13) opening into the additional tank (12), or the connecting line (13) opens into the additional tank (12) at multiple ends and in particular a connecting line float valve (6.3) is arranged at each of the multiple ends of the connecting line (13) opening into the additional tank (12).

14. Tank system according to at least one of the preceding claims, **characterized in that** the tank (1) and/or the additional tank (12) has means, in particular a purge valve, preferably a roll-over valve (14), which prevent the occurrence of too great a vacuum in the tank (1) and/or in the additional tank (12).

## Revendications

1. Système de cuve pour véhicule automobile, comprenant une cuve (1), un réservoir (2) disposé dans la cuve, une unité de prélèvement (3) conçue pour prélever du carburant dans le réservoir (2) par l'intermédiaire d'un conduit (4) d'amenée au moteur et l'apporter à une unité d'entraînement du véhicule automobile, et au moins un conduit d'amenée (5) qui relie le réservoir (2) à la cuve (1),
le réservoir (2) présentant une soupape (6.1) de réservoir et pouvant être raccordé à la cuve (1) par l'intermédiaire de la soupape (6.1) de réservoir,
la soupape (6.1) de réservoir étant ouverte en mode de fonctionnement normal dans lequel la soupape (6.1) de réservoir est entourée par le carburant présent dans la cuve (1) et étant fermée dans un mode de quantité résiduelle dans lequel la soupape (6.1) de réservoir n'est pas entourée par le carburant présent dans la cuve (1),
le réservoir (2) étant un récipient qui, en mode de quantité résiduelle, est ouvert exclusivement sur le conduit (4) d'amenée au moteur et sur le ou les conduits d'amenée (5),
**caractérisé en ce que**
la soupape (6.1) de réservoir est disposée dans une cuve d'équilibrage (7) de la cuve (1) de telle sorte que la cuve d'équilibrage (7) puisse être raccordée au réservoir (2) par l'intermédiaire de la soupape (6.1) de réservoir.

2. Système de cuve selon la revendication 1, **caractérisé en ce que** le réservoir (2) est ouvert en mode de fonctionnement normal sur le conduit (4) d'amenée au moteur et sur la soupape (6.1) de réservoir, de préférence également est ouvert sur le ou les conduits d'amenée (5).

3. Système de cuve selon les revendications 1 ou 2, **caractérisé en ce que** la soupape (6.1) de réservoir est une soupape à flotteur.

4. Système de cuve selon au moins l'une des revendications précédentes, **caractérisé en ce que** le réservoir (2) est un récipient plat situé à proximité du plancher de la cuve (1).

5. Système de cuve selon la revendication 1, **caractérisé en ce que** le système de cuve peut être rempli par un tube de remplissage (8), le tube de remplissage (8) débouchant dans la cuve d'équilibrage (7).

6. Système de cuve selon au moins l'une des revendications précédentes, **caractérisé en ce qu'**une soupape (6.2) à flotteur de conduit d'amenée est disposée à l'extrémité du conduit d'amenée (5) qui débouche dans la cuve (1).

7. Système de cuve selon au moins l'une des revendications précédentes, **caractérisé en ce qu'**il comporte au moins deux conduits d'amenée (5).

8. Système de cuve selon au moins l'une des revendications précédentes, **caractérisé en ce que** l'unité de prélèvement (3) comporte un conduit de retour (9) et **en ce que** le conduit de retour (9) débouche dans une partie (10) de réserve de retour.

9. Système de cuve selon au moins l'une des revendications précédentes, **caractérisé en ce que** le réservoir (2) présente un moyen qui empêche la formation d'une dépression dans le réservoir (2) au-delà d'une dépression maximale prédéterminée, en particulier une soupape de sécurité (11).

10. Système de cuve selon les revendications 8 et 9, **caractérisé en ce que** la soupape de sécurité (11) est raccordée à la zone de réserve de retour (10).

11. Système de cuve selon la revendication 8, **caractérisé en ce que** la zone (10) de réserve de retour est une section séparée de la cuve d'équilibrage (7), en particulier une section séparée latéralement.

12. Système de cuve selon au moins l'une des revendications précédentes, **caractérisé en ce qu'**il comporte au moins une cuve supplémentaire (12), la cuve supplémentaire (12) étant raccordée à la cuve (1) ou au réservoir (2) par l'intermédiaire d'un conduit de liaison (13).

13. Système de cuve selon la revendication 12, **caractérisé en ce qu'**une soupape (6.3) à flotteur de conduit de liaison est disposée à l'extrémité du conduit de liaison (13) qui débouche dans la cuve supplémentaire (12) ou **en ce que** le conduit de liaison (13) débouche à plusieurs extrémités dans la cuve supplémentaire (12) et en particulier à plusieurs extrémités du conduit de liaison (13) qui débouche dans la cuve supplémentaire (12), une soupape (6.3) à flotteur de conduit de liaison est chaque fois disposée.

14. Système de cuve selon au moins l'une des revendications précédentes, **caractérisé en ce que** la cuve (1) et/ou la cuve supplémentaire (12) présente un moyen qui empêche la formation d'une dépression trop élevée dans la cuve (1) et/ou dans la cuve supplémentaire (12), en particulier une soupape d'évent, de préférence une soupape déroulante (14).
